Europäisches Patentamt

European Patent Office

Office européen des brevets

(11) Veröffentlichungsnummer: **0 444 310 A2**

## EUROPÄISCHE PATENTANMELDUNG

(21) Anmeldenummer: 90125442.5

(22) Anmeldetag: 24.12.90

(51) Int. Cl.⁵: **G03B 27/58**

(30) Priorität: **01.03.90 DE 9002411 U**

(43) Veröffentlichungstag der Anmeldung:
**04.09.91 Patentblatt 91/36**

(84) Benannte Vertragsstaaten:
**BE DE FR GB IT SE**

(71) Anmelder: **DU PONT DE NEMOURS (DEUTSCHLAND) GMBH**
**Du Pont Strasse 1**
**W-6380 Bad Homburg(DE)**

(72) Erfinder: **Loewe, Erhard**
**Röderwiese 22**
**W-5401 Waldesch(DE)**
Erfinder: **Urban, Otfried**
**Wilhelm-Kopp-Strasse 2/Rheinufer**
**W-6200 Wiesbaden-Biebrich(DE)**

(54) **Lichtdichte Kassette.**

(57) Es wird eine lichtdichte Kassette für eine Spule mit bahnförmigem, lichtempfindlichen Material unterschiedlicher Stärke angegeben, die aus einem durch zwei Gehäuseabschnitte gebildeten lichtdichten Gehäuse besteht und mit einem parallel zur Spulenachse verlaufenden, in der Breite verstellbaren Filmaustrittsschlitz versehen ist.

Die Verstellbarkeit der Schlitzbreite wird dadurch bewirkt, daß die beiden Gehäuseabschnitte unter Vorspannung so zueinander angeordnet werden, daß der Schlitz seine größte Breite annimmt und daß eine gegen die Vorspannung wirkende Spanneinrichtung vorgesehen ist, mit der die Breite des Austrittsschlitzes von außen einstellbar ist. Der verstellbare Austrittsschlitz erlaubt ein gleichmäßiges Abwickeln von bahnförmigem Material unterschiedlicher Stärke ohne Verkratzen von dessen Oberfläche.

Fig.3

Die Neuerung betrifft eine lichtdichte Kassette für einen Wickel aus bahnförmigem Material mit einem Gehäuse, das einen durch zwei Gehäuseabschnitte gebildeten, im wesentlichen parallel zur Wickelachse verlaufenden Austrittsschlitz aufweist, dessen Breite veränderlich ist.

Bei Kassetten dieser Art, die in der Regel mit lichtempfindlichem Material, das zu einem Wickel aufgewickelt ist, geladen sind, müssen mehrere zum Teil gegensätzliche Forderungen erfüllt sein. Die Kassette muß auch im Bereich des Austrittsschlitzes lichtdicht verschlossen sein. Andererseits darf das bahnförmige Material, z.B. ein lichtempfindlicher Film, beim Herausziehen aus der Kassette nicht verkratzt werden, d.h. das Material darf im Bereich des Austrittsschlitzes praktisch nicht geklemmt oder unter größerer Reibung mit einem Gehäuseteil durch den Schlitz geführt werden. Weiterhin dürfen die Kräfte, die erforderlich sind, um das Material gleichmäßig abzurollen, nicht zu hoch sein, da sich dies auf einen gleichmäßigen Materialtransport störend auswirkt. Andererseits soll der Anfang der Bahn während eines Transports der Kassette nicht unbeabsichtigt in die Kassette zurückgezogen werden.

Aus Kostengründen soll eine Kassette dieser Art auch für verschieden starkes bahnförmiges Material wie Film oder Papier geeignet sein, d.h. die Breite des Austrittsschlitzes muß an die jeweilige Materialstärke angepaßt werden können.

Bei einer bekannten Kassette (DE 29 50 624 A1) sind die Gehäuseabschnitt unter Vorspannung federnd aneinander zur Anlage gebracht. Der Filmanfang ist daher im Normalfall im Austrittsschlitz eingeklemmt. Bei Zug auf den Film übt dieser auf den einen Gehäuseabschnitt eine Kraft aus, die so gerichtet ist, daß sich der Schlitz verbreitert. Der Schlitz wird dann so breit, daß der Film nur noch mit dem unteren Gehäuseabschnitt Kontakt hat. Damit soll vermieden werden, daß die beschichtete Außenseite des Films bei der Bewegung mit dem anderen Gehäuseabschnitt in Berührung kommt und verkratzt. Bei dieser Konstruktion ist zwar die Gefahr, daß die beschichtete Seite des Films verkratzt wird, relativ gering. Dafür ist die Gefahr, daß die andere Seite des Materials verkratzt wird, umso höher. Um den Film überhaupt aus der Kassette herausziehen zu können, ist eine erhebliche Zugspannung erforderlich. Diese muß einerseits den Filmtransport aus der Kassette heraus bewerkstelligen, andererseits muß sie auch die Federkraft des unteren Gehäuseabschnitts überwinden, um den Austrittsschlitz offen zu halten.

Es ist daher die Aufgabe der vorliegenden Neuerung, eine lichtdichte Kassette anzugeben, die ein gleichmäßiges Abwickeln von bahnförmigem Material unterschiedlicher Stärke ohne Verkratzen auch in Belichtungsgeräten, wie z.B. Scannern, die nur eine sehr geringe Zugspannung ausüben, ermöglicht.

Diese Aufgabe wird dadurch gelöst, daß die beiden Gehäuseabschnitte unter Vorspannung zueinander so angeordnet sind, daß der Schlitz seine größte Breite annimmt und daß eine gegen die Vorspannung wirkende Spanneinrichtung vorgesehen ist, mit der die Breite des Austrittsschlitzes von außen einstellbar ist.

Im Gegensatz zu der bekannten Anordnung ist der Austrittsschlitz in der "Ruhestellung" nicht geschlossen, sondern offen. In dieser Stellung kann das Material praktisch ohne Berührung des Gehäuses oder, falls eine Berührung mit dem Gehäuse auftritt, mit geringer Reibung am Gehäuse durch den Austrittsschlitz nach außen treten. Dies ist die Position, die für die Verwendung der Kassette beispielsweise in einem Belichtungsgerät erwünscht ist. In diesem Fall kann die Filmtransporteinrichtung ganz für die gleichmäßige Bewegung des Filmes, d.h. des bahnförmigen Materials, ausgelegt sein, ohne die zum Teil erheblichen Kräfte aufbringen zu müssen, die im Stand der Technik zum Herausziehen des Filmes aus der Kassette erforderlich waren. Für den Transport der Kassette, beispielsweise von ihrer Herstellungsstätte zu ihrem Verwendungsort, wird die Spanneinrichtung betätigt, die die Breite des Austrittsschlitzes von außen einstellt. Da beim Transport der Kassette in der Regel das bahnförmige Material nicht aus der Kassette herausgezogen werden soll, schadet es nichts, wenn die Breite des Austrittsschlitzes soweit verringert wird, daß die beiden Gehäuseabschnitte auf dem Material zur Anlage gebracht werden. In dieser Stellung ist der Austrittsschlitz praktisch lichtdicht verschlossen. Üblicherweise ist der Austrittsschlitz in Bewegungsrichtung der Materialbahn gekrümmt, so daß die Lichtdichtheit auch schon gewährleistet ist, wenn die beiden Gehäuseabschnitte nicht unmittelbar aufeinander liegen. Auch in Belichtungsgeräten, die nur eine sehr geringe Zugspannung ausüben, wie z.B. bestimmte Scanner, läßt sich eine gleichmäßige Abwicklung erreichen.

Mit Vorteil ist aber der Austrittsschlitz in einer Schließstellung der Spanneinrichtung verschließbar, wobei das bahnförmige Material zwischen den Gehäuseabschnitten einklemmbar ist. Diese Maßnahme ermöglicht zum einen, daß auch bei nicht gekrümmter Austrittsschlitzführung kein Licht in die Kassette eindringen kann. Zum anderen wird der Materialbahnanfang, der aus der Kassette herausragt, eingeklemmt, so daß verhindert wird, daß er unbeabsichtigt in die Kassette zurückgezogen wird.

In einer besonders bevorzugten Ausführungsform ist das Gehäuse zweiteilig ausgebildet und weist ein Oberteil und ein Unterteil auf, die insbesondere auf der dem Austrittsschlitz abgewandten Seite lösbar miteinander verbunden sind, wobei der Austrittsschlitz als Teil der Trennfuge zwischen Oberteil und Unterteil ausgebildet ist und die Spanneinrichtung zur Verbindung von Oberteil und Unterteil dient. Die beiden Gehäuseabschnitte werden hierbei durch Oberteil und Unterteil gebildet. Kassetten dieser Art sind wiederverwendbar, also nachladbar. Die Kassetten-Hälften, also Oberteil und Unterteil, können auf dem dem Austrittsschlitz gegenüberliegenden Teil der Trennfuge beispielsweise durch Steckschaniere miteinander verbunden sein. Die Spanneinrichtung stellt dann die Verbindung von Oberteil und Unterteil im Bereich des Austrittsschlitzes sicher, so daß ein Aufklappen von Oberteil und Unterteil erst nach Lösen der Spanneinrichtung möglich ist. Durch diesen Aufbau wird das Nachladen der Kassette stark vereinfacht. Die Spanneinrichtung wird gelöst, der geleerte Wickelkern entnommen, ein neuer Wickel eingelegt, die Kassette zugeklappt und die Spanneinrichtung wieder befestigt.

Dabei ist bevorzugt, daß an jeder Stirnseite keilförmig ausgebildete, den jeweiligen Gehäuseabschnitten zugeordnete Führungsbahnen angeordnet sind, auf denen eine Verschlußklammer als Spanneinrichtung verschiebbar gelagert ist. Mit anderen Worten befindet sich beispielsweise eine Führungsbahn an jeder Stirnseite auf dem Oberteil, die andere auf dem Unterteil. Durch das Verschieben der Verschlußklammer werden die beiden Führungsbahnen an jeder Stirnseite auf einander zu bewegt. Dadurch bewegen sich auch Oberteil und Unterteil bzw. die beiden den Austrittsschlitz bildenden Gehäuseabschnitte auf einander zu, so daß sich die Breite des Austrittsschlitzes verringert. Durch Verschieben der Verschlußklammer in die entgegengesetzte Richtung bewegen sich die beiden Gehäuseabschnitte bzw. Oberteil und Unterteil unter der Wirkung der Vorspannung von einander weg, so daß sich die Breite des Austrittsschlitzes wieder vergrößert. Jeder Stellung der Verschlußklammer auf den Führungsbahnen ist also eine bestimmte Breite des Austrittsschlitzes zugeordnet.

Mit Vorteil weisen die Führungsbahnen mehrere Raststellungen auf. Damit lassen sich bei der Kassette sehr leicht verschiedene vorbestimmte Breiten des Austrittsschlitzes einstellen. Dies ist insbesondere dann von Vorteil, wenn mit dem gleichen Kassettentyp Material unterschiedlicher Dicke, z.B. Film oder Papier, verwendet werden soll. Für Film wird die Verschlußklammer auf eine Raststellung geschoben, die eine geringere Breite des Austrittsschlitzes bewirkt. Bei Papier, das eine stärkere Dicke aufweist, wird die Verschlußklammer auf eine Raststellung geschoben, die den Austrittsschlitz weiter öffnet. Der Austrittsschlitz soll nicht wesentlich breiter als das Material sein, um die Gefahr eines Lichteinfalls zu vermeiden.

In einer besonders bevorzugten Ausführungsform sind im Oberteil und im Unterteil Lagerschalenabschnitte ausgebildet, die Lagerzapfen des Wickels aufnehmen, wobei die Lagerschalenabschnitte in der Schließstellung der Spanneinrichtung einen Druck auf die Lagerzapfen ausüben, der eine Drehung des Wickels verhindert. Eine weitere Forderung an die Kassette ist, daß der Wickel während eines Transportes der Kassette gegen ungewolltes Aufdrallen bzw. Aufrollen gesichert sein muß. Dieses Aufdrallen führt dazu, daß das Material an der Innenwand des Gehäuses anliegt und durch diese Wand beim Transport zerkratzt werden kann. Der Druck auf die Lagerzapfen läßt sich leicht dadurch aufbauen, daß bei der Bewegung der Spanneinrichtung in die Schließstellung auch Oberteil und Unterteil auf einander zu bewegt werden und die Lagerzapfen zwischen sich einklemmen. Gleichzeitig wird das aus dem Austrittsschlitz herausragende Ende der Materialbahn eingeklemmt, so daß der Wickel gegen Verdrehen und die Materialbahn gegen Hineinrutschen in die Kassette gesichert ist. Die Materialbahn kann daher auf dem Wickel durch eine einzige Betätigung unter einer vorbestimmten Spannung gehalten werden, ohne daß die Gefahr besteht, daß der Wickel sich aufdrallt.

Mit Vorteil sind die Lagerzapfen im Gehäuse mit Hilfe von reibungsarmen Kunststoffen gelagert. Durch Verwendung von reibungsarmen Kunststoffen können die beim Herausziehen der Materialbahn auftretenden Reibungskräfte minimiert und so ein gleichmäßiger und einwandfreier Materialtransport, z.B. im Belichtungsgerät gewährleistet werden. Dies ist besonders wichtig in solchen Fällen, in denen, wie bei bestimmten Scannern, die Belichtung des Materials, d.h. in diesem Fall des Filmes, während des Vorschubes erfolgen.

Dabei können die Lagerzapfen im Gehäuse mit Hilfe von halbschaligen Buchsen und/oder Ringen gelagert sein. Dadurch vermeidet man, daß die gesamten Lagerzapfen oder das gesamte Gehäuse aus den reibungsarmen Kunststoffen hergestellt sein müssen.

Insbesondere können die reibungsarmen Kunststoffe im wesentlichen durch Acetal-Harze gebildet sein.

Die Neuerung wird im folgenden anhand eines bevorzugten Ausführungsbeispiels in Verbindung mit der Zeichnung beschrieben. Darin zeigen:

Fig. 1      eine Seitenansicht einer Kassette mit einer Verschlußklammer in Öffnungsstellung, teilweise im Aufriß,

Fig. 2      einen vergrößerten Ausschnitt aus Fig. 1,

Fig. 3      einen vergrößerten Ausschnitt aus Fig. 1 mit der Verschlußklammer in Öffnungsstellung, teilweise im Aufriß,

Fig. 4      eine Ansicht ähnlich zu Fig. 3 mit der Verschlußklammer in Schließstellung, teilweise im Aufriß,

Fig. 5 eine Schnittansicht V-V nach Fig. 1,

Fig. 6 eine Schnittansicht VI-VI nach Fig. 1 und

Fig. 7 eine Schnittansicht VII-VII nach Fig. 1.

Eine Kassette 1 weist ein Oberteil 2 und ein Unterteil 3 auf, die unter Bildung einer Trennfuge 4 zusammengefügt sind. Ein Teil der Trennfuge 4 ist als Austrittsschlitz 5 ausgebildet. Die Wände des Austrittsschlitzes 5 sind mit Plüschbahnen 6, 7 ausgekleidet. Auf der gegenüberliegenden Seite der Trennfuge sind Oberteil 2 und Unterteil 3 durch ein Steckschanier 8 miteinander verbunden. Das Oberteil 2 weist einen Vorsprung 9 auf, der in eine Nut 10 im Unterteil 3 hineinragt. Dadurch wird sichergestellt, daß kein Licht durch die Trennfuge in das Innere der Kassette 1 gelangen kann.

Im Innern der Kassette ist ein Wickel 11 aus bahnförmigem Material, beispielsweise einem Film, gelagert. Der Film ist auf einem Pappkern 12 aufgewickelt. Auf beiden Seiten des Pappkernes befinden sich Bordscheiben 13, die ein Teleskopieren des Wickels 11 verhindern. Jede Bordscheibe 13 weist einen Lagerflansch 14 auf, der in den Pappkern 12 hineingesteckt ist und die Verbindung zwischen Bordscheibe 13 und Pappkern 12 sicherstellt. Die Bordscheibe 13 stellt auch die Verbindung zwischen dem Lagerflansch 14 und einem Lagerzapfen 15 her, mit dem der Wickel 11 im Gehäuse gelagert ist. Das Gehäuseoberteil 2 weist eine obere Lagerhalbschale 16 und das Gehäuseunterteil 3 eine untere Lagerhalbschale 17 auf, in die der Lagerzapfen 15 hineinragt. Zwischen den Lagerhalbschalen 16, 17 und dem Lagerzapfen 15 ist eine Lagerbuchse 18 aus reibungsarmem Kunststoff angeordnet. Die Lagerbuchse 18 aus reibungsarmem Kunststoff setzt die Reibung zwischen dem Lagerzapfen 15 und den Lagerhalbschalen 16, 17 herab und vermindert dadurch die zum Abwickeln des Wickels 11 notwendige Zugkraft. Als reibungsarme Kunststoffe eignen sich insbesondere Acetal-Harze, beispielsweise DELRIN, der von der Anmelderin vertrieben wird.

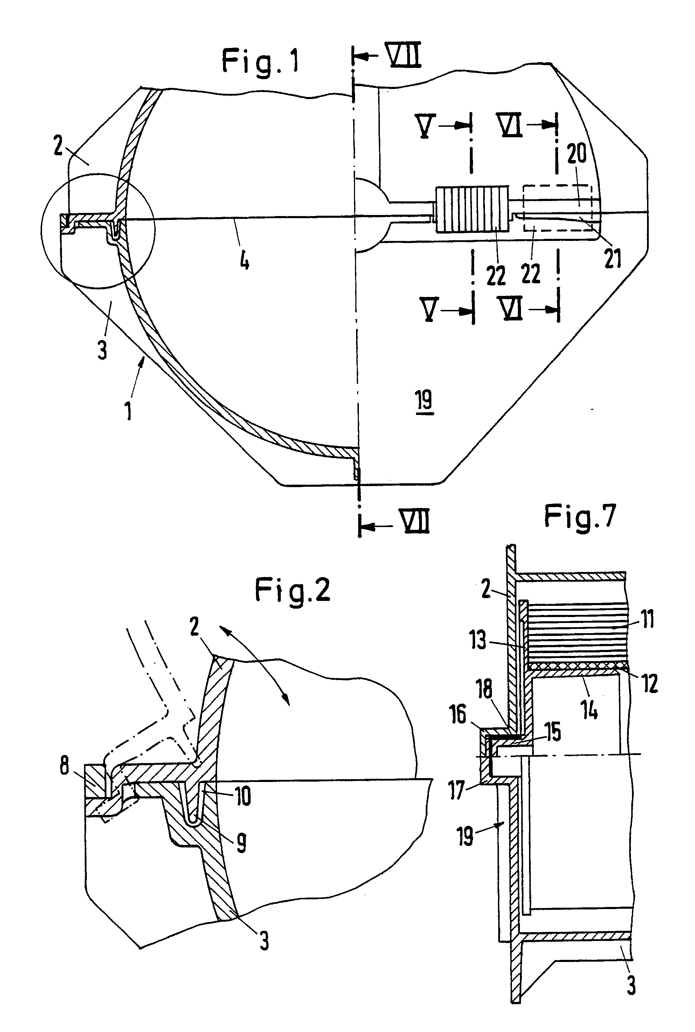

Wenn Oberteil 2 und Unterteil 3 durch das Steckschanier 8 miteinander verbunden sind, hat der Austrittsschlitz 5 eine Breite A, die durch eine durch das Zusammenwirken von Steckschanier 8 und Lagerzapfen 15 mit den Lagerhalbschalen 16, 17 hervorgerufene Vorspannung bewirkt wird. Auf jeder Stirnseite 19 der Kassette 1 ist deswegen sowohl auf dem Oberteil 2 als auch auf dem Unterteil 3 jeweils eine Führungsbahn 20, 21 vorgesehen, auf denen eine Verschlußklammer 22 verschoben werden kann. Die Verschlußklammer ist in Fig. 1 in zwei Stellungen dargestellt. Die erste, durchgezogen gezeichnete Stellung ist eine sogenannte "Öffnungsstellung", die andere, strichliert gezeichnete Stellung ist eine sogenannte "Schließstellung". Die Führungsbahnen 20, 21 sind keilförmig ausgeführt, d.h. ihre Oberkanten entfernen sich voneinander umso weiter, je größer die Entfernung vom Lagerzapfen 15 ist. Wird nun die Verschlußklammer 22 nach außen geschoben, d.h. vom Lagerzapfen 15 weg, werden die Bahnen 20, 21 und damit Oberteil 2 und Unterteil 3 im Bereich des Austrittsschlitzes 5 immer weiter auf einander zu bewegt. In der Schließstellung der Verschlußklammer 22 hat der Austrittsschlitz 5 nur noch die Breite B. In dieser Stellung wird ein Materialbahnende, das vom Wickel 11 abgewickelt ist, im Austrittsschlitz 5 eingeklemmt. Der Unterschied zwischen der Breite A des Austrittsschlitz 5 in der Öffnungsstellung der Verschlußklammer 22 und der Breite B in der Schließstellung der Verschlußklammer 22 ist nicht sehr groß. Er reicht aber aus, um einerseits ein zuverlässiges Festklemmen des Filmendes zu gewährleisten, wenn sich die Verschlußklammer 22 in Schließstellung befindet, anderer-seits ist die Breite A groß genug, um einen reibungsfreien Transport des Filmes aus der Kassette 1 heraus zu gestatten, wenn die Verschlußklammer 22 in die Öffnungsstellung verschoben worden ist.

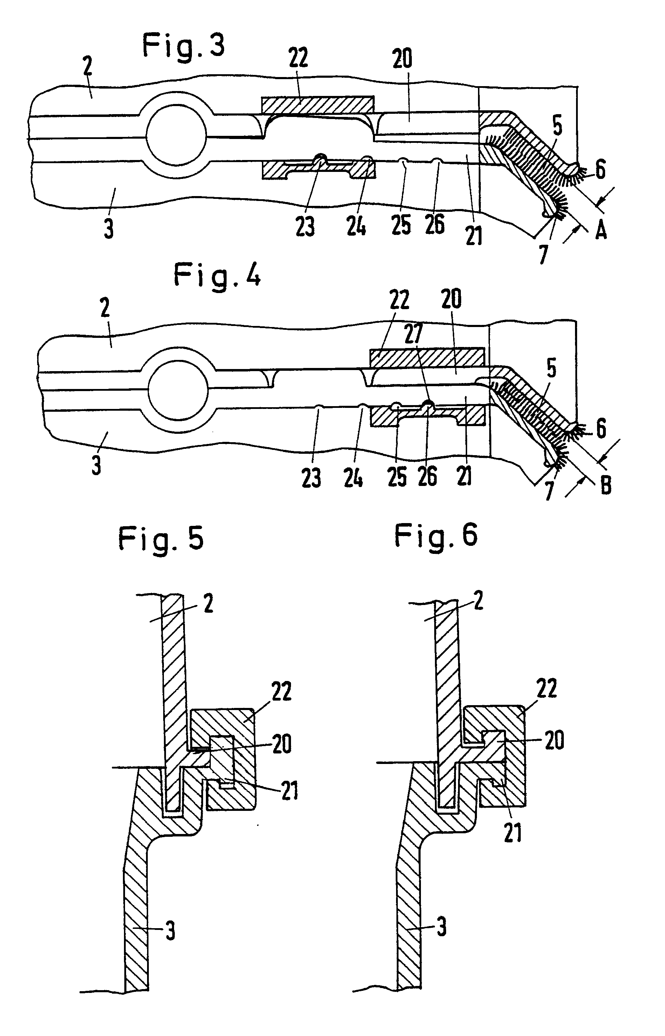

In der unteren Führungsbahn 21 sind vier Rastnuten 23-26 vorgesehen, in die ein Vorsprung 27 der Verschlußklammer 22 einrasten kann. Jeder durch die Rastnuten 23-26 gebildeten Raststellung ist eine bestimmte Breite des Austrittsschlitzes 5 zugeordnet. Wie sich aus den Fig. 3 und 4 ergibt, ist der Raststellung 23 die Breite A des Austrittsschlitzes 5 zugeordnet, während der Raststellung 26 die Breite B zugeordnet ist. Die Breiten des Austrittsschlitzes in den Raststellungen 24, 25 liegen zwischen den Breiten A und B. Damit lassen sich mit einer einzigen Kassette unterschiedliche Breiten für das Material des Wickels 11 verwenden. Die Breite des Austrittsschlitzes 5 muß nämlich beim Abwickeln nur ganz geringfügig größer dimensioniert werden als es der Dicke des abzuwickelnden Materials entspricht. Dies vermindert die Gefahr eines unerwünschten Lichteinfalls ganz erheblich.

Wenn die Verschlußklammer 22 in ihre Schließstellung bewegt wird, bewegen sich Oberteil 2 und Unterteil 3 im Bereich des Austrittsschlitzes 5 auf einander zu. Da Oberteil 2 und Unterteil 3 durch das Steckscharnier 8 miteinander verbunden sind, erfolgt eine entsprechende Annäherung von Oberteil 2 und Unterteil 3 auch im Bereich des Lagerzapfens 15, d.h. die Lagerhalbschalen 16 und 17 bewegen sich ebenfalls auf einander zu und klemmen den Lagerzapfen 15 einschließlich der Lagerbuchse 18 zwischen sich ein, so daß eine Drehung des Wickels 11 verhindert wird. Mit einem einzigen Handgriff, nämlich mit der Verschiebung der Verschlußklammer 22 in die Schließstellung, läßt sich also erreichen, daß das Filmende zuverlässig im Austrittsschlitz 5 eingeklemmt und eine weitere Drehung des Wickels 11 verhindert wird. Der Wickel 11 kann somit während des Transports der Kassette 1 unter seiner ursprünglichen Spannung gehalten werden, so daß keine Gefahr besteht, daß sich der Wickel aufdrallt und die äußere Lage des Wickels 11 mit der Innenseite der Kassette 1 in Berührung kommt und verkratzt. Wenn die Kassette verwendet werden soll, beispielsweise wenn sie in ein Belichtungsgeräte eingesetzt ist, werden die beiden an beiden Stirnseiten vorgesehenen Verschlußklammern 22 in eine dem auf dem Wickel 11 aufgewickelten Material entsprechende Raststellung 23-25 geschoben, wodurch sich der Austrittsschlitz 5 in ausreichendem Maße öffnet, um ein leichtes Herausziehen des Materials ohne Verkratzen seiner Oberfläche zu gewährleisten.

**Patentansprüche**

1. Lichtdichte Kassette für einen Wickel aus bahnförmigem Material und einem Gehäuse, das einen durch zwei Gehäuseabschnitte gebildeten im wesentlichen parallel zur Wickelachse verlaufenden Austrittsschlitz aufweist, dessen Breite veränderlich ist, dadurch gekennzeichnet, daß die beiden Gehäuseabschnitte (2, 3) unter Vorspannung zu einander so angeordnet sind, daß der Schlitz seine größte Breite (A) annimmt und daß eine gegen die Vorspannung wirkende Spanneinrichtung (22) vorgesehen ist, mit der die Breite des Austrittsschlitzes (5) von außen einstellbar ist.

2. Kassette nach Anspruch 1 mit einem Wickel aus bahnförmigem Material, dadurch gekennzeichnet, daß der Austrittsschlitz (5) in einer Schließstellung (26) der Spanneinrichtung (22) verschließbar ist, wobei das bahnförmige Material zwischen den Gehäuseabschnitten (2, 3) einklemmbar ist.

3. Kassette nach Anspruch 1 oder 2, dadurch gekennzeichnet, daß das Gehäuse zweiteilig ausgebildet ist und ein Oberteil (2) und ein Unterteil (3) aufweist, die insbesondere auf der dem Austrittsschlitz (5) abgewandten Seite lösbar miteinander verbunden sind, wobei der Austrittsschlitz (5) als Teil einer Trennfuge zwischen Oberteil (2) und Unterteil (3) ausgebildet ist und die Spanneinrichtung (22) zur Verbindung von Oberteil (2) und Unterteil (3) dient.

4. Kassette nach einem der Ansprüche 1 bis 3, dadurch gekennzeichnet, daß an jeder Stirnseite (19) keilförmig ausgebildete, den jeweiligen Gehäuseabschnitten (2, 3) zugeordnete Führungsbahnen (20, 21) angeordnet sind, auf denen eine Verschlußklammer (22) als Spanneinrichtung verschiebbar gelagert ist.

5. Kassette nach Anspruch 4, dadurch gekennzeichnet, daß die Führungsbahnen (20, 21) mehrere Raststellungen (23-26) aufweisen.

6. Kassette nach einem der Ansprüche 3 bis 5, dadurch gekennzeichnet, daß im Oberteil (2) und im Unterteil (3) Lagerschalenabschnitte (16, 17) ausgebildet sind, die Lagerzapfen (15) des Wickels (11) aufnehmen, wobei die Lagerschalenabschnitte (16, 17) in der Schließstellung der Spanneinrichtung (22) einen Druck auf die Lagerzapfen (15) ausüben, der eine Drehung des Wickels (11) verhindert.

7. Kassette nach Anspruch 6, dadurch gekennzeichnet, daß die Lagerzapfen (15) im Gehäuse mit Hilfe von reibungsarmen Kunststoffen gelagert sind.

8. Kassette nach Anspruch 7, dadurch gekennzeichnet, daß die Lagerzapfen (15) im Gehäuse mit Hilfe von halbschaligen Buchsen und/oder Ringen (18) gelagert sind.

9. Kassette nach Anspruch 7 oder 8, dadurch gekennzeichnet, daß die reibungsarmen Kunststoffe im wesentlichen durch Acetal-Harze gebildet sind.

EP 0 444 310 A2

Fig.1

Fig.7

Fig.2

6

# Fig. 3

# Fig. 4

# Fig. 5

# Fig. 6